(19) Europäisches Patentamt
European Patent Office
Office européen des brevets

(11) **EP 4 601 364 A1**

(12) **EUROPEAN PATENT APPLICATION**
published in accordance with Art. 153(4) EPC

(43) Date of publication:
**13.08.2025 Bulletin 2025/33**

(21) Application number: **23871023.0**

(22) Date of filing: **28.09.2023**

(51) International Patent Classification (IPC):
**H04W 52/14** (2009.01)

(52) Cooperative Patent Classification (CPC):
**H04W 52/14; H04W 52/24**

(86) International application number:
**PCT/CN2023/122532**

(87) International publication number:
**WO 2024/067798 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 CN 202211191293**

(71) Applicant: **Apogee Networks, LLC
Dallas, TX 75201 (US)**

(72) Inventors:
• **JIANG, Qi
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS IN NODE FOR WIRELESS COMMUNICATION**

(57) The present application discloses a method and apparatus in a node for wireless communication. A node first receives a first signaling, wherein the first signaling is used for determining a first reference signal resource set; and then the node determines a first power value, and transmits a first signal when the first power value is greater than 0. The transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; and whether the first signaling is used for determining a second reference signal resource set is used for determining whether the target power value is related to a threshold other than the first threshold. The present application improves the manner of determining the upper limit of the transmission power when a terminal is configured with a plurality of reference signal resource sets, so as to avoid power waste, thereby improving the system performance.

```
100 ──►  First node
              │
              ▼
┌─────────────────────────────────────────────────────┐
│ Step 101 Receive a first signaling, wherein the first │
│ signaling is used for determining a first reference   │
│ signal resource set                                    │
└─────────────────────────────────────────────────────┘
              │
              ▼
┌─────────────────────────────────────────────────────┐
│ Step 102 Determine a first power value, and transmit  │
│ a first signal when the first power value is greater   │
│ than 0                                                 │
└─────────────────────────────────────────────────────┘
              │
              ▼
            End
```

FIG. 1

EP 4 601 364 A1

## Description

## Technical Field

The present application relates to a transmission method and apparatus in a wireless communication system, and in particular to a transmission scheme and apparatus for determining uplink power in wireless communication.

## Background Art

5G wireless cellular communication network system (5G-RAN) enhances the uplink power control of UE (User Equipment) on the basis of the original LTE (Long-Term Evolution). Compared to LTE, because the 5G NR system does not have a CRS (Common Reference Signal), the pathloss measurement required for uplink power control needs to be performed using a CSI-RS (Channel State Information Reference Signal) and an SSB (SS/PBCH Block). In addition, the most prominent characteristic of the NR system is the introduction of a beam management mechanism. A terminal can communicate using a plurality of different transmitting and receiving beams, and thus the terminal is required to be capable of measuring a plurality of pathlosses corresponding to a plurality of beams. One way to determine the pathloss is achieved by using an SRI (Sounding Reference Signal Resource Indicator) in DCI (Downlink Control Information) to indicate a certain associated downlink RS (Reference Signal) resource.

In the discussion of NR R17 and R18, the scenario of configuring a plurality of Panels on the terminal side has been adopted, and the impact of introducing a plurality of Panels on power control also needs to be considered accordingly.

## Summary of the Invention

In the discussion of NR R17 and R18, the transmission of the terminal is enhanced. One important aspect is the introduction of two Panels. The terminal can use two Panels to transmit simultaneously on two transmitting beams to obtain better spatial diversity gain. However, an important indicator of uplink transmission is power control. The determination of the maximum transmission power of existing UE is designed based on the situation of one Panel, and does not consider the relationship and limitations of the transmission power between two Panels.

Aiming at the above problem of uplink power control in a multi-panel scenario, the present application discloses a solution. It should be noted that in the description of the present application, multi-panel is only used as a typical application scenario or example; the present application is also applicable to other scenarios facing similar problems, such as single-panel scenarios, or for different technical fields, such as technical fields other than uplink power control, such as measurement reporting fields, uplink data transmission fields and other non-uplink power control fields to achieve similar technical effects. In addition, using a unified solution for different scenarios (including, but not limited to, multi-panel scenarios) can also help to reduce hardware complexity and cost. In the case of no conflict, embodiments and features in the embodiments in any node of the present application can be applied to any other node. In the case of no conflict, embodiments and features in the embodiments of the present application can be arbitrarily combined with each other. In particular, the interpretation of the terminologies, nouns, functions, and variables in the present application (if not specifically noted) can refer to the definitions in the specification protocols TS36 series, TS38 series, and TS37 series of 3GPP. If necessary, 3GPP standards TS38.211, TS38.212, TS38.213, TS38.214, TS38.215, TS38.321, TS38.331, TS38.305, and TS37.355 can be referred to for assisting in understanding the present application.

The present application discloses a method in a first node for wireless communication, comprising:

> receiving a first signaling, wherein the first signaling is used for determining a first reference signal resource set; and
> determining a first power value, and transmitting a first signal when the first power value is greater than 0,
> wherein the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

As one embodiment, one feature of the above method comprises: the first node is enabled to share a transmission power value between two Panels.

As one embodiment, another feature of the above method is that the manner of determining the maximum value of the transmission power under a single Panel is different from the manner of determining the maximum value of the transmission power under a plurality of Panels.

According to one aspect of the present application, when the first signaling is used for determining the second reference signal resource set, a second threshold is associated with the second reference signal resource set, and the first threshold and the second threshold are used together for determining the target power value; when the first signaling is not used for determining the second reference signal resource set, only the first threshold of the first threshold and the second threshold is used for determining the target power value.

As one embodiment, another feature of the above method is that when two Panels are used simultaneously, the maximum transmission power value on one Panel is affected by a transmission power value of another Panel.

According to one aspect of the present application, the above method comprises:

receiving a first target reference signal and a second target reference signal; and
transmitting a second signal,
wherein time domain resources occupied by the second signal overlap with time domain resources occupied by the first signal; the transmission power of the second signal is a second power value, the second power value is not greater than the second threshold, and a spatial transmission parameter of the second signal is related to the second reference signal resource set; the first target reference signal is used for determining a first pathloss, the second target reference signal is used for determining a second pathloss, the first pathloss is used for determining a first candidate power value, and the second pathloss is used for determining the second power value; when the sum of the first threshold and the second threshold is greater than a third threshold and the sum of the first candidate power value and the second power value is greater than the third threshold, the target power value is equal to the difference between the third threshold and the second power value; when the sum of the first threshold and the second threshold is not greater than the third threshold, the target power value is equal to the first candidate power value.

As one embodiment, one feature of the above method is that the maximum transmission power value of the UE, the maximum transmission power value on each Panel, and the actual transmission power value on one of the Panels will affect the determination of the transmission power value of another Panel.

According to one aspect of the present application, the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; when the value obtained by subtracting the first remaining power value from the first candidate power value is not greater than the target threshold, the first power value is not greater than the target power value, and the target power value is equal to the first power difference.

As one embodiment, one feature of the above method is that when the transmission power of the first signal decreases too much, the transmission of the first signal is abandoned.

According to one aspect of the present application, the third threshold is exclusive to the first node, and the third threshold is unrelated to the first reference signal resource set or the second reference signal resource set.

According to one aspect of the present application, the second reference signal resource set is indicated by an RRC signaling, or the second reference signal resource set is predefined.

According to one aspect of the present application, a priority corresponding to the second signal is higher than the priority corresponding to the first signal.

The present application discloses a method in a second node for wireless communication, comprising:

transmitting a first signaling, wherein the first signaling is used for determining a first reference signal resource set; and
receiving a first signal,
wherein the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

According to one aspect of the present application, when the first signaling is used for determining the second reference signal resource set, a second threshold is associated with the second reference signal resource set, and the first threshold and the second threshold are used together for determining the target power value; when the first signaling is not used for determining the second reference signal resource set, only the first threshold of the first threshold and the second threshold is used for determining the target power value.

According to one aspect of the present application, the above method comprises:

transmitting a first target reference signal and a second target reference signal; and
receiving a second signal,
wherein time domain resources occupied by the second signal overlap with time domain resources occupied by the first signal; the transmission power of the second signal is a second power value, the second power value is not greater than the second threshold, and a spatial transmission parameter of the second signal is related to the second reference signal resource set; the first target reference signal is used for determining a first pathloss, the second target reference signal is used for determining a second pathloss, the first pathloss is used for determining a first candidate power value, and the second pathloss is used for determining the second power value; when the sum of the first threshold and the second threshold is greater than a third threshold and the sum of the first candidate power value and the second power value is greater than the third threshold, the target power value is equal to the difference between the third threshold and the second power value; when the sum of the first threshold and the second threshold is not greater than the third threshold, the target power value is equal to the first candidate power value.

According to one aspect of the present application, the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; when the value obtained by subtracting the first remaining power value from the first candidate power value is not greater than the target threshold, the first power value is not greater than the target power value, and the target power value is equal to the first power difference.

According to one aspect of the present application, the third threshold is exclusive to the first node, and the third threshold is unrelated to the first reference signal resource set or the second reference signal resource set.

According to one aspect of the present application, the second reference signal resource set is indicated by an RRC signaling, or the second reference signal resource set is predefined.

According to one aspect of the present application, a priority corresponding to the second signal is higher than the priority corresponding to the first signal.

The present application discloses a first node for wireless communication, comprising:

a first receiver, receiving a first signaling, wherein the first signaling is used for determining a first reference signal resource set; and
a first transmitter, determining a first power value, and transmitting a first signal when the first power value is greater than 0,
wherein the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

The present application discloses a second node for wireless communication, comprising:

a second transmitter, transmitting a first signaling, wherein the first signaling is used for determining a first reference signal resource set; and
a second receiver, receiving a first signal, wherein the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

As one embodiment, the benefit of the scheme in the present application is: optimizing the determination of the uplink transmission power value to improve performance.

**Brief Description of the Drawings**

Other features, purposes and advantages of the present application will become more apparent from reading the detailed description of the non-limiting embodiments made with reference to the following drawings:

FIG. 1 shows a processing flowchart of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;

FIG. 4 shows a schematic diagram of a first communication device and a second communication device according to one embodiment of the present application;

FIG. 5 shows a flowchart of a first signaling according to one embodiment of the present application;

FIG. 6 shows a flowchart of a second signaling according to one embodiment of the present application;

FIG. 7 shows a schematic diagram of a first reference signal resource set and a second reference signal resource set according to one embodiment of the present application;

FIG. 8 shows a schematic diagram of a first node according to one embodiment of the present application;

FIG. 9 shows a schematic diagram of an antenna port and an antenna port group according to one embodiment of the present application;

FIG. 10 shows a structural block diagram of a processing apparatus in a first node device according to one embodiment of the present application;

FIG. 11 shows a structural block diagram of a processing apparatus in a second node device according to one embodiment of the present application.

**Detailed Description of Embodiments**

The technical solution of the present application will be further described in detail below in conjunction with the drawings. It should be noted that, in the case of no conflict, embodiments and the features in the embodiments of the present application can be arbitrarily combined with each other.

**Embodiment 1**

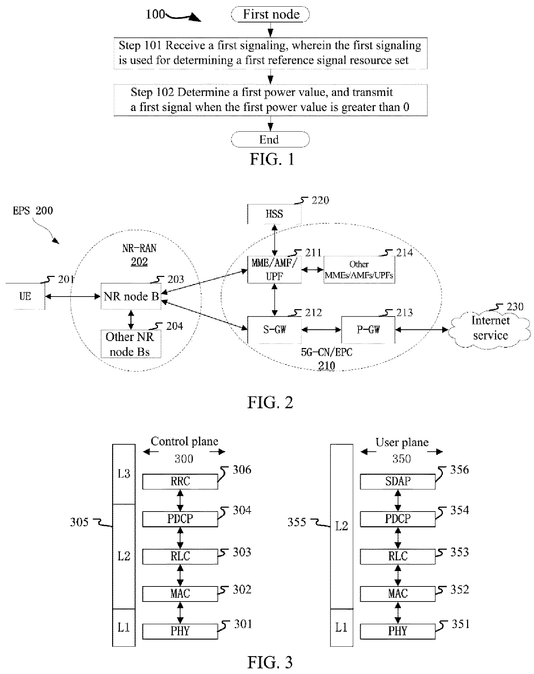

Embodiment 1 illustrates one processing flowchart of a first node, as shown in FIG. 1. In 100 shown in FIG. 1, each box represents one step. In Embodiment 1, the first node in the present application receives a first signaling in step 101, wherein the first signaling is used for determining a first reference signal resource set; and determines a first power value and transmits a first signal when the first power value is greater than 0 in step 102.

In Embodiment 1, the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

As one embodiment, the first signaling comprises an RRC (Radio Resource Control) signaling.

As one embodiment, the first signaling comprises a MAC (Medium Access Control) signaling.

As one embodiment, the first signaling comprises MAC CEs (Control Elements).

As one embodiment, the first signaling comprises a physical layer dynamic signaling.

As one embodiment, a physical layer channel occupied by the first signaling comprises a PDCCH (Physical Downlink Control Channel).

As one embodiment, the first signaling comprises a piece of DCI.

As one embodiment, the first signaling is used for indicating the first reference signal resource set.

As one embodiment, the first reference signal resource set comprises $K1$ reference signal resources, the first signaling is used for determining at least one of the $K1$ reference signal resources, and $K1$ is a positive integer.

As one embodiment, the first reference signal resource set comprises $K1$ reference signal resources, the first signaling is used for indicating at least one of the $K1$ reference signal resources, and $K1$ is a positive integer.

As one embodiment, the first reference signal resource set corresponds to one SRS (Sounding Reference Signal) resource set.

As one embodiment, the first reference signal resource set is associated with one SRS resource set identifier.

As one embodiment, the first reference signal resource set is associated with one SRS resource set.

As one embodiment, the first reference signal resource set comprises $K1$ reference signal resources, and the $K1$ reference signal resource sets respectively correspond to $K1$ SRS resources.

As one embodiment, the first reference signal resource set corresponds to one CSI-RS resource set.

As one embodiment, the first reference signal resource set is associated with one CSI-RS resource set.

As one embodiment, the first reference signal resource set is associated with one CSI-RS resource set identifier.

As one embodiment, the first reference signal resource set comprises $K1$ reference signal resources, and the $K1$ reference signal resource sets respectively correspond to $K1$ CSI-RS resources.

As one embodiment, the first reference signal resource set comprises $K1$ reference signal resources, and the $K1$ reference signal resource sets respectively correspond to $K1$ TCIs (Transmission Configuration Indications).

As one embodiment, the first reference signal resource set comprises $K1$ reference signal resources, and the $K1$ reference signal resource sets respectively correspond to $K1$ TCI-States.

As one embodiment, the first reference signal resource set comprises K1 reference signal resources, and the K1 reference signal resource sets respectively correspond to K1 TCI-StateIds.

As one embodiment, the first reference signal resource set comprises K1 reference signal resources, and the K1 reference signal resource sets respectively correspond to K1 SRIs.

As one embodiment, the first reference signal resource set is associated with one Panel.

As one embodiment, the first reference signal resource set is associated with one identifier.

As one embodiment, the first reference signal resource set is associated with one CORESET (Control Resource Set) Pool.

As one embodiment, the second reference signal resource set comprises K2 reference signal resources, the first signaling is used for determining at least one of the K2 reference signal resources, and K2 is a positive integer.

As one embodiment, the second reference signal resource set comprises K2 reference signal resources, the first signaling is used for indicating at least one of the K2 reference signal resources, and K2 is a positive integer.

As one embodiment, the second reference signal resource set corresponds to one SRS resource set.

As one embodiment, the second reference signal resource set is associated with one SRS resource set identifier.

As one embodiment, the second reference signal resource set is associated with one SRS resource set.

As one embodiment, the second reference signal resource set comprises K2 reference signal resources, and the K2 reference signal resource sets respectively correspond to K2 SRS resources.

As one embodiment, the second reference signal resource set corresponds to one CSI-RS resource set.

As one embodiment, the second reference signal resource set is associated with one CSI-RS resource set.

As one embodiment, the second reference signal resource set is associated with one CSI-RS resource set identifier.

As one embodiment, the second reference signal resource set comprises K2 reference signal resources, and the K2 reference signal resource sets respectively correspond to K2 CSI-RS resources.

As one embodiment, the second reference signal resource set comprises K2 reference signal resources, and the K2 reference signal resource sets respectively correspond to K2 TCIs.

As one embodiment, the second reference signal resource set comprises K2 reference signal resources, and the K2 reference signal resource sets respectively correspond to K2 TCI-States.

As one embodiment, the second reference signal resource set comprises K2 reference signal resources, and the K2 reference signal resource sets respectively correspond to K2 TCI-StateIds.

As one embodiment, the second reference signal resource set comprises K2 reference signal resources, and the K2 reference signal resource sets respectively correspond to K2 SRIs.

As one embodiment, the second reference signal resource set is associated with one Panel.

As one embodiment, the second reference signal resource set is associated with one identifier.

As one embodiment, the second reference signal resource set is associated with one CORESET Pool.

As one embodiment, the first reference signal resource set is different from the second reference signal resource set.

As one embodiment, the first reference signal resource set and the second reference signal resource set respectively correspond to different identifiers.

As one embodiment, the first reference signal resource set and the second reference signal resource set respectively correspond to different SRS resource sets.

As one embodiment, the first reference signal resource set and the second reference signal resource set respectively correspond to different CSI-RS resource sets.

As one embodiment, the first reference signal resource set and the second reference signal resource set respectively correspond to different Panels.

As one embodiment, the unit of the first power value is dBm.

As one embodiment, the unit of the first power value is milliwatt.

As one embodiment, the unit of the first power value is watt.

As one embodiment, the first node comprises: a first transmitter, determining the first power value, and abandoning the transmission of the first signal when the first power value is equal to 0.

As one embodiment, the physical layer channel occupied by the first signal comprises a PUSCH (Physical Uplink Shared Channel).

As one embodiment, the physical layer channel occupied by the first signal comprises a PUCCH (Physical Uplink Control Channel).

As one embodiment, a transmission channel corresponding to the first signal comprises a UL-SCH (Uplink Shared Channel).

As one embodiment, the first signal is generated by at least one TB (Transport Block).

As one embodiment, the first signal is generated by at least one bit block.

As one embodiment, the meaning that a spatial transmission parameter of the first signal is related to the first reference signal resource set comprises: at least one reference signal resource in the first reference signal resource set is used for determining the spatial transmission parameter of the first signal.

As one embodiment, the meaning that a spatial transmission parameter of the first signal is related to the first reference signal resource set comprises: the first signal and at least one reference signal resource in the first reference signal resource set are QCL (Quasi Colocated).

As one embodiment, the meaning that a spatial transmission parameter of the first signal is related to the first reference signal resource set comprises: at least one reference signal resource in the first reference signal resource set is used for determining a TCI corresponding to the first signal.

As one embodiment, the unit of the target power value is dBm.

As one embodiment, the unit of the target power value is milliwatt.

As one embodiment, the unit of the target power value is watt.

As one embodiment, the unit of the first threshold is dBm.

As one embodiment, the unit of the first threshold is milliwatt.

As one embodiment, the unit of the first threshold is watt.

As one embodiment, the first threshold is exclusive to a Panel.

As one embodiment, the spatial transmission parameter in the present application comprises a TCI.

As one embodiment, the spatial transmission parameter in the present application comprises a TCI-State.

As one embodiment, the spatial transmission parameter in the present application comprises a TCI-StateId.

As one embodiment, the first threshold is associated with the first reference signal resource set.

As one embodiment, the first threshold corresponds to the maximum transmission power used when the first node transmits a radio signal using a spatial transmission parameter corresponding to one reference signal resource in the first reference signal resource set.

As one embodiment, the first threshold corresponds to the maximum transmission power used when the first node transmits the radio signal using a Panel corresponding to the first reference signal resource set.

As one embodiment, the first threshold is configured through an RRC signaling.

As one embodiment, the first threshold is related to a Category of the first node.

As one embodiment, the first threshold is related to a Capability of the first node.

As one embodiment, the first threshold corresponds to the maximum transmission power value when the first node uses a single panel for transmission.

As one embodiment, the first threshold corresponds to the maximum transmission power value when the first node transmits the radio signal using any reference signal resource in the first reference signal resource set as the spatial transmission parameter.

As one embodiment, the first threshold corresponds to the maximum transmission power value when the first node transmits the radio signal using at least one reference signal resource in the first reference signal resource set as the spatial transmission parameter.

As one embodiment, the first threshold corresponds to the maximum transmission power value when the first node transmits the radio signal using the spatial transmission parameter corresponding to one SRS resource set.

As one embodiment, the first threshold is configured for the first reference signal resource set.

As one embodiment, the first threshold corresponds to $P_{max}^{SRS,set}$.

As one embodiment, the first threshold corresponds to $P_{max}^{Panel}$.

As one embodiment, the first threshold corresponds to $P_{max}^{SRS,set,0}$.

As one embodiment, the first threshold corresponds to $P_{max}^{Panel,0}$.

As one embodiment, when the first signaling is used for determining the second reference signal resource set, the first signaling is used for indicating the second reference signal resource set.

As one embodiment, when the first signaling is used for determining the second reference signal resource set, the first signaling is used for indicating at least one of K2 reference signal resources comprised in the second reference signal resource set.

As one embodiment, the first signaling comprises a first field, and the first field comprised in the first signaling is used for indicating one reference signal resource in the first reference signal resource set.

As one sub-embodiment of the present embodiment, when the first signaling is used for determining the second reference signal resource set, the first field comprised in the first signaling is used for indicating one reference signal resource in the second reference signal resource set.

As one sub-embodiment of the present embodiment, when the first signaling is used for determining the second reference signal resource set, the first signaling also comprises a second field, and the second field comprised in the first signaling is used for indicating one reference signal resource in the second reference signal resource set.

As one embodiment, a higher layer parameter "usage" associated with both the first reference signal resource set and the second reference signal resource set is set to "codebook" or "nonCodebook".

As one embodiment, the meaning that the first signaling is used for determining a first reference signal resource set comprises: the first signaling indicates that one of a first field and a second field in the first signaling is associated with the first reference signal resource set.

As one embodiment, the meaning that whether the first signaling is used for determining a second reference signal resource set comprises: whether the first signaling indicates that one of a first field and a second field in the first signaling is associated with the second reference signal resource set.

As one embodiment, the first power value is equal to the target power value.

As one embodiment, the first signal comprises a radio signal.

As one embodiment, the first signal comprises a baseband signal.

**Embodiment 2**

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, however, those skilled in the art will readily appreciate that the various concepts presented throughout the present application may be extended to networks providing circuit switching services or other cellular networks. The NR-RAN comprises an NR Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmit Receive Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MMEs/AMFs/UPFs 214, an S-GW (Service Gateway) 212, and a P-GW (Packet Date Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node in the present application.

As one embodiment, the UE201 supports simultaneous transmission of a plurality of Panels.

As one embodiment, the UE201 supports power sharing among a plurality of Panels.

As one embodiment, the UE201 supports a plurality of uplink RFs (Radio Frequency).

As one embodiment, the UE201 supports simultaneous transmission of a plurality of uplink RFs.

As one embodiment, the UE201 supports reporting of a plurality of UE capability value sets.

As one embodiment, the NR node B corresponds to the second node in the present application.

As one embodiment, the NR node B supports simultaneous reception of signals from a plurality of Panels of one terminal.

As one embodiment, the NR node B supports reception of signals transmitted by a plurality of uplink RFs (Radio Frequency) from the same terminal.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

## Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB or an RSU in V2X) and a second communication node device (a gNB, UE or an RSU in V2X) using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and is responsible for the link between the first communication node device and the second communication node device through the PHY301. An L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and the PDCP sublayer 304 also provides inter-cell mobility support of the first communication node device to the second communication node device. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first signaling is generated at the PHY301 or PHY351.

As one embodiment, the first signaling is generated at the MAC302 or MAC352.

As one embodiment, the first signaling is generated at the RRC306.

As one embodiment, the first signal is generated at the MAC302 or MAC352.

As one embodiment, the first signal is generated at the RRC306.

As one embodiment, the first target reference signal is generated at the PHY301 or PHY351.

As one embodiment, the first target reference signal is generated at the MAC302 or MAC352.

As one embodiment, the first target reference signal is generated at the RRC306.

As one embodiment, the second target reference signal is generated at the PHY301 or PHY351.

As one embodiment, the second target reference signal is generated at the MAC302 or MAC352.

As one embodiment, the second target reference signal is generated at the RRC306.

As one embodiment, the second signal is generated at the MAC302 or MAC352.

As one embodiment, the second signal is generated at the RRC306.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

## Embodiment 4

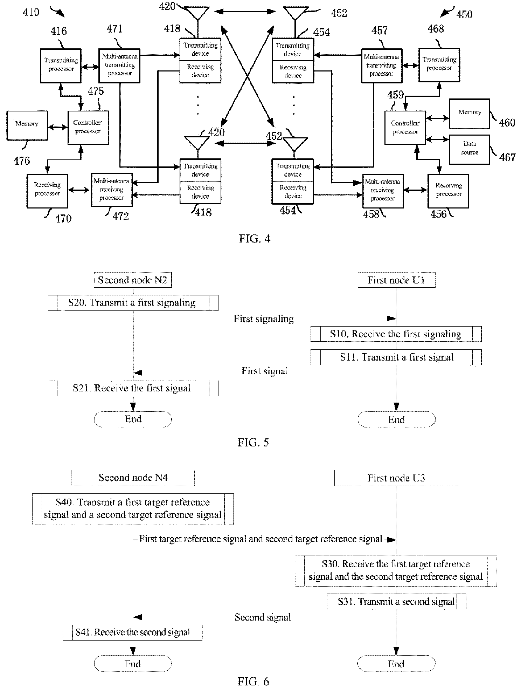

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes the each spatial stream with a reference signal (eg, pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 apparatus comprises: at least one processor and at least one memory, wherein the at least one memory comprises a computer program code; the at least one memory and the computer program code are configured to be used together with the at least one processor; the first communication device 450 apparatus at least: first receives a first signaling, wherein the first signaling is used for determining a first reference signal resource set; and then determines a first power value, and transmits a first signal when the first power value is greater than 0; the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

As one embodiment, the first communication device 450 comprises: a memory storing a computer-readable instruction program, wherein the computer-readable instruction program generates actions when executed by at least one processor, the actions comprising: first receiving the first signaling, wherein the first signaling is used for determining the first reference signal resource set; and then determining the first power value, and transmitting the first signal when the first power value is greater than 0; the transmission power of the first signal is the first power value, and the spatial transmission parameter of the first signal is related to the first reference signal resource set; the first power value is not greater than the target power value, the target power value is not greater than the first threshold, and the first threshold is associated with the first reference signal resource set; whether the first signaling is used for determining the second reference signal resource set is used for determining whether the target power value is related to the threshold other than the first threshold; the second reference signal resource set is different from the first reference signal resource set.

As one embodiment, the second communication device 410 apparatus comprises: at least one processor and at least one memory, wherein the at least one memory comprises the computer program code; the at least one memory and the computer program code are configured to be used together with the at least one processor. The second communication device 410 apparatus at least: first transmits the first signaling, wherein the first signaling is used for determining the first reference signal resource set; and then receives the first signal; the transmission power of the first signal is the first power value, and the spatial transmission parameter of the first signal is related to the first reference signal resource set; the first power value is not greater than the target power value, the target power value is not greater than the first threshold, and the first threshold is associated with the first reference signal resource set; whether the first signaling is used for determining the second reference signal resource set is used for determining whether the target power value is related to the threshold other than the first threshold; the second reference signal resource set is different from the first reference signal resource set.

As one embodiment, the second communication device 410 apparatus comprises: a memory storing a computer-readable instruction program, wherein the computer-readable instruction program generates actions when executed by at least one processor, the actions comprising: first receiving the first signaling, wherein the first signaling is used for determining the first reference signal resource set; and then receiving the first signal; the transmission power of the first signal is the first power value, and the spatial transmission parameter of the first signal is related to the first reference signal resource set; the first power value is not greater than the target power value, the target power value is not greater than the first threshold, and the first threshold is associated with the first reference signal resource set; whether the first signaling is used for determining the second reference signal resource set is used for determining whether the target power value is related to the threshold other than the first threshold; the second reference signal resource set is different from the first reference signal resource set.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one servicing cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving the first signaling; at least the first four of the antenna 420, the transmitting device 418, the multi-antenna transmitting processor 471, the transmitting processor 416, and the controller/processor 475 are used for transmitting the first signaling.

As one embodiment, at least the first four of the antenna 452, the transmitter transmitting device 454, the multi-antenna transmitting processor 457, the transmitting processor 468, and the controller/processor 459 are used for determining the first power value, and transmitting the first signal when the first power value is greater than 0; at least the first four of the antenna 420, the receiving device 418, the multi-antenna receiving processor 472, the receiving processor 470, and the controller/processor 475 are used for receiving the first signal.

As one embodiment, at least the first four of the antenna 452, the receiving device 454, the multi-antenna receiving processor 458, the receiving processor 456, and the controller/processor 459 are used for receiving a first target reference signal; at least the first four of the antenna 420, the transmitting device 418, the multi-antenna transmitting processor 471, the transmitting processor 416, and the controller/processor 475 are used for transmitting the first target reference signal.

As one embodiment, at least the first four of the antenna 452, the receiving device 454, the multi-antenna receiving processor 458, the receiving processor 456, and the controller/processor 459 are used for receiving a second target reference signal; at least the first four of the antenna 420, the transmitting device 418, the multi-antenna transmitting processor 471, the transmitting processor 416, and the controller/processor 475 are used for transmitting the second target reference signal.

As one embodiment, at least the first four of the antenna 452, the transmitting device 454, the multi-antenna transmitting processor 457, the transmitting processor 468, and the controller/processor 459 are used for transmitting a second signal; and at least the first four of the antenna 420, the receiving device 418, the multi-antenna receiving processor 472, the receiving processor 470, and the controller/processor 475 are used for receiving the second signal.

## Embodiment 5

Embodiment 5 illustrates one flowchart of a first signaling, as shown in FIG. 5. In FIG. 5, a first node U1 communicates with a second node N2 via a radio link. It should be particularly noted that the order in this embodiment does not limit the signal transmission order and implementation order in the present application. In the case of no conflict, embodiments, sub-embodiments and subsidiary embodiments in Embodiment 5 can be applied to Embodiment 6; conversely, in the case of no conflict, any embodiment, sub-embodiment and subsidiary embodiment in Embodiment 6 can be applied to Embodiment 5.

For **the first node U1,** in step S10, the first signaling is received; and in step S11, a first signal is transmitted.

For **the second node N2,** in step S20, the first signaling is transmitted; and in step S21, the first signal is received.

In Embodiment 5, the first signaling is used for determining a first reference signal resource set; the first node determines that a first power value is greater than 0; the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

Typically, when the first signaling is used for determining the second reference signal resource set, a second threshold is associated with the second reference signal resource set, and the first threshold and the second threshold are used together for determining the target power value; when the first signaling is not used for determining the second reference signal resource set, only the first threshold of the first threshold and the second threshold is used for determining the target power value.

As one embodiment, the second threshold is associated with the second reference signal resource set.

As one embodiment, the second threshold corresponds to the maximum transmission power used when the first node transmits a radio signal using the spatial transmission parameter corresponding to one reference signal resource in the second reference signal resource set.

As one embodiment, the second threshold corresponds to the maximum transmission power used when the first node transmits the radio signal using a Panel corresponding to the second reference signal resource set.

As one embodiment, the second threshold is configured through an RRC signaling.

As one embodiment, the second threshold is related to a Category of the first node.

As one embodiment, the second threshold is related to a Capability of the first node.

As one embodiment, the second threshold corresponds to the maximum transmission power value when the first node uses a single panel for transmission.

As one embodiment, the second threshold corresponds to the maximum transmission power value when the first node transmits the radio signal using any reference signal resource in the second reference signal resource set as the spatial transmission parameter.

As one embodiment, the second threshold corresponds to the maximum transmission power value when the first node transmits the radio signal using at least one reference signal resource in the second reference signal resource set as the spatial transmission parameter.

As one embodiment, the second threshold corresponds to the maximum transmission power value when the first node transmits the radio signal using the spatial transmission parameter corresponding to one SRS resource set.

As one embodiment, the second threshold is configured for the second reference signal resource set.

As one embodiment, the second threshold corresponds to $P_{max}^{SRS,set}$ .

As one embodiment, the second threshold corresponds to $P_{max}^{Panel}$ .

As one embodiment, the second threshold corresponds to $P_{max}^{SRS,set,1}$ .

As one embodiment, the second threshold corresponds to $P_{max}^{Panel,1}$ .

As one embodiment, the first threshold is equal to the second threshold.

As one embodiment, the first threshold and the second threshold are independently configured.

As one embodiment, the second threshold is linearly related to the first threshold.

As one embodiment, the unit of the second threshold is dBm.

As one embodiment, the unit of the second threshold is milliwatt.

As one embodiment, the unit of the second threshold is watt.

As one embodiment, the second threshold is exclusive to a Panel.

As one embodiment, the meaning that the first threshold and the second threshold are used together for determining the target power value comprises: the target power value is not greater than the sum of the first threshold and the second threshold.

As one embodiment, the meaning that the first threshold and the second threshold are used together for determining the target power value comprises: the target power value is not greater than any one of the first threshold and the second threshold.

As one embodiment, the meaning that the first threshold and the second threshold are used together for determining the target power value comprises: the target power value is not greater than the product of the sum of the first threshold and the second threshold and a first coefficient, the first coefficient is fixed, or the first coefficient is configured through an RRC signaling.

As one embodiment, the meaning that the first threshold is used together for determining the target power value comprises: the target power value is not greater than the first threshold.

As one embodiment, the meaning that the first threshold is used together for determining the target power value comprises: the target power value is not greater than the product of the first threshold and a second coefficient, the second coefficient is fixed, or the second coefficient is configured through the RRC signaling.

Typically, the second reference signal resource set is indicated by the RRC signaling, or the second reference signal resource set is predefined.

Typically, a priority corresponding to the second signal is higher than the priority corresponding to the first signal.

As one embodiment, the meaning that a priority corresponding to the second signal is higher than the priority corresponding to the first signal comprises: compared to the first signal, the second signal is allocated power preferentially.

As one embodiment, the meaning that a priority corresponding to the second signal is higher than the priority corresponding to the first signal comprises: a priority index corresponding to the first signal is less than the priority index corresponding to the second signal.

As one embodiment, the meaning that a priority corresponding to the second signal is higher than the priority corresponding to the first signal comprises: the priority index corresponding to the first signal is greater than the priority index corresponding to the second signal.

## Embodiment 6

Embodiment 6 illustrates one flowchart of a second signal, as shown in FIG. 6. In FIG. 6, a first node U3 communicates with a second node N4 via a radio link. It should be particularly noted that the order in this embodiment does not limit the signal transmission order and implementation order in the present application. In the case of no conflict, embodiments, sub-embodiments and subsidiary embodiments in Embodiment 6 can be applied to Embodiment 5; conversely, in the case of no conflict, any embodiment, sub-embodiment and subsidiary embodiment in Embodiment 5 can be applied to Embodiment 6.

For **the first node U3,** in step S30, a first target reference signal and a second target reference signal are received; and in step S31, the second signal is transmitted.

For **the second node N4,** in step S40, the first target reference signal and the second target reference signal are transmitted; and in step S41, the second signal is received.

In Embodiment 6, time domain resources occupied by the second signal overlap with time domain resources occupied by the first signal; the transmission power of the second signal is a second power value, the second power value is not greater than the second threshold, and a spatial transmission parameter of the second signal is related to the second reference signal resource set; the first target reference signal is used for determining a first pathloss, the second target reference signal is used for determining a second pathloss, the first pathloss is used for determining a first candidate power value, and the second pathloss is used for determining a second power value; when the sum of the first threshold and the second threshold is greater than a third threshold and the sum of the first candidate power value and the second power value is greater than the third threshold, the target power value is equal to the difference between the third threshold and the second power value; when the sum of the first threshold and the second threshold is not greater than the third threshold, the target power value is equal to the first candidate power value.

As one embodiment, a physical layer channel occupied by the second signal comprises a PUSCH.

As one embodiment, a transmission channel corresponding to the second signal comprises a UL-SCH.

As one embodiment, the physical layer channel occupied by the second signal comprises a PUCCH.

As one embodiment, the second signal is generated by at least one TB.

As one embodiment, the second signal is generated by at least one bit block.

As one embodiment, the first signal and the second signal are generated by the same TB.

As one embodiment, the first signal and the second signal are respectively generated by two independent TBs.

As one embodiment, a slot occupied by the first signal overlaps in time with the slot occupied by the second signal.

As one embodiment, the meaning that a spatial transmission parameter of the second signal is related to the second reference signal resource set comprises: at least one reference signal resource in the second reference signal resource set is used for determining the spatial transmission parameter of the second signal.

As one embodiment, the meaning that a spatial transmission parameter of the second signal is related to the second reference signal resource set comprises: the second signal is QCL with at least one reference signal resource in the second reference signal resource set.

As one embodiment, the meaning that a spatial transmission parameter of the second signal is related to the second reference signal resource set comprises: at least one reference signal resource in the second reference signal resource set is used for determining a TCI corresponding to the second signal.

As one embodiment, the first target reference signal comprises a CSI-RS.

As one embodiment, the first target reference signal comprises an SSB (Synchronization Signal/physical broadcast channel Block).

As one embodiment, the first target reference signal corresponds to one CSI-RS resource.

As one embodiment, the first target reference signal corresponds to one SSB.

As one embodiment, the first target reference signal corresponds to one TCI.

As one embodiment, the first target reference signal corresponds to one TCI-State.

As one embodiment, the first target reference signal corresponds to one TCI-StateId.

As one embodiment, the second target reference signal comprises a CSI-RS.

As one embodiment, the second target reference signal comprises an SSB.

As one embodiment, the second target reference signal corresponds to one CSI-RS resource.

As one embodiment, the second target reference signal corresponds to one SSB.

As one embodiment, the second target reference signal corresponds to one TCI.

As one embodiment, the second target reference signal corresponds to one TCI-State.

As one embodiment, the second target reference signal corresponds to one TCI-StateId.

As one embodiment, the first target reference signal is associated with the first reference signal resource set.

As one embodiment, the second target reference signal is associated with the second reference signal resource set.

As one embodiment, the first target reference signal corresponds to one CSI-RS resource.

As one embodiment, the second target reference signal corresponds to one CSI-RS resource.

As one embodiment, the unit of the first pathloss is dB.

As one embodiment, the unit of the second pathloss is dB.

As one embodiment, the first candidate power value is not greater than the first threshold.

As one embodiment, the first target reference signal is QCL with the first signal.

As one embodiment, the second target reference signal is QCL with the second signal.

As one embodiment, the first target reference signal is QCL with one reference signal resource in the first reference signal resource set.

As one embodiment, the second target reference signal is QCL with one reference signal resource in the second reference signal resource set.

Typically, the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; when the value obtained by subtracting the first remaining power value from the first candidate power value is not greater than the target threshold, the first power value is not greater than the target power value, and the target power value is equal to the first power difference.

As one embodiment, the target threshold is determined through an RRC signaling.

As one embodiment, when the first power value is equal to 0, the first node abandons the transmission of the first signal.

As one embodiment, when the value obtained by subtracting the first remaining power value from the first candidate power value is not greater than the target threshold, the first power value is equal to the target power value.

Typically, the third threshold is exclusive to the first node, and the third threshold is unrelated to the first reference signal resource set or the second reference signal resource set.

As one embodiment, the third threshold corresponds to $P_{Total}^{Multi-Panel}$.

As one embodiment, the third threshold corresponds to $P_{Total}$.

As one embodiment, the third threshold corresponds to $P_{cmax}$.

As one embodiment, the third threshold corresponds to the maximum transmission power of the first node.

As one embodiment, the third threshold is related to a Category of the first node.

As one embodiment, the third threshold is related to a Capability of the first node.

As one embodiment, the second signal comprises a radio signal.

As one embodiment, the second signal comprises a baseband signal.

As one embodiment, the step S30 is located before step S10 in Embodiment 5.

As one embodiment, the step S30 is located after step S10 and before step S11 in Embodiment 5.

As one embodiment, the step S40 is located before step S20 in Embodiment 5.

As one embodiment, the step S40 is located after step S20 and before step S21 in Embodiment 5.

As one embodiment, the step S31 is located before step S11 in Embodiment 5.

As one embodiment, the step S31 occurs simultaneously with step S11 in Embodiment 5.

As one embodiment, the step S31 is located after step S11 in Embodiment 5.

As one embodiment, the step S41 is located before step S21 in Embodiment 5.

As one embodiment, the step S41 occurs simultaneously with step S21 in Embodiment 5.

As one embodiment, the step S41 is located after step S21 in Embodiment 5.

## Embodiment 7

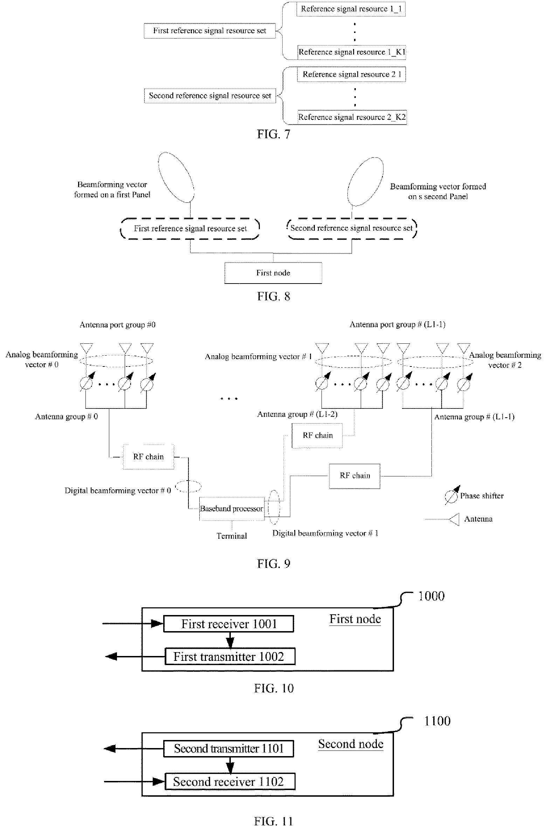

Embodiment 7 illustrates one schematic diagram of a first reference signal resource set and a second reference signal resource set, as shown in FIG. 7. In FIG. 7, the first reference signal resource set comprises K1 reference signal resources, which respectively correspond to a reference signal resource 1_1 to a reference signal resource 1_K1 in the figure; the second reference signal resource set comprises K2 reference signal resources, which respectively correspond to a reference signal resource 2_1 to a reference signal resource 2_K2 in the figure; K1 is a positive integer, and K2 is a positive integer.

As one embodiment, K1 is equal to 1.

As one embodiment, K2 is equal to 1.

As one embodiment, K1 is greater than 1.

As one embodiment, K2 is greater than 1.

As one embodiment, the first threshold is applicable to all reference signal resources in the first reference signal resource set.

As one embodiment, the second threshold is applicable to all reference signal resources in the second reference signal resource set.

As one embodiment, the third threshold is applicable to all reference signal resources in the first reference signal resource set and all reference signal resources in the second reference signal resource set.

As one embodiment, the first reference signal resource set and the second reference signal resource set respectively correspond to two different Panel IDs.

As one embodiment, the first reference signal resource set and the second reference signal resource set respectively correspond to two Panels comprised in the first node.

As one embodiment, the first reference signal resource set and the second reference signal resource set respectively correspond to two RFs (Radio Frequency) comprised in the first node.

As one embodiment, the first reference signal resource set and the second reference signal resource set respectively correspond to two radio frequency channels comprised in the first node.

## Embodiment 8

Embodiment 8 illustrates one schematic diagram of a first node, as shown in FIG. 8. In FIG. 8, the first node has two Panels, which are a first Panel and a second Panel, respectively. The first Panel and the second Panel are respectively associated with a first reference signal resource set and a second reference signal resource set; the two Panels can transmit two independent radio signals in the same time-frequency resource.

As one embodiment, the maximum transmission power value may be dynamically shared between the first Panel and the second Panel.

As one embodiment, when the first Panel and the second Panel are used simultaneously, the sum of the maximum transmission power value of the first Panel and the maximum transmission power value of the second Panel is not greater than the third threshold.

As one embodiment, when the first Panel or the second Panel is used alone, the maximum transmission power value of the first Panel is not greater than the first threshold, or the maximum transmission power value of the second Panel is not greater than the second threshold.

As one embodiment, the first threshold in the present application is not greater than the second threshold.

## Embodiment 9

Embodiment 9 illustrates a schematic diagram of an antenna port and an antenna port group, as shown in FIG. 9.

In Embodiment 9, one antenna port group comprises a positive integer number of antenna ports; one antenna port is formed by superimposing antennas in the positive integer number of antenna groups through antenna virtualization; one antenna group comprises the positive integer number of antennas. One antenna group is connected to a baseband processor through one RF (Radio Frequency) chain, and different antenna groups correspond to different RF chains. The mapping coefficients of all antennas in the positive integer number of antenna groups comprised in a given antenna port to the given antenna port constitute a beamforming vector corresponding to the given antenna port. The mapping coefficients of a plurality of antennas comprised in any given antenna group in the positive integer number of antenna groups comprised in the given antenna port to the given antenna port constitute an analog beamforming vector of the given antenna group. The analog beamforming vectors corresponding to the positive integer number of antenna groups are arranged diagonally to form an analog beamforming matrix corresponding to the given antenna port. The mapping coefficients of the positive integer number of antenna groups to the given antenna port constitute a digital beamforming vector corresponding to the given antenna port. The beamforming vector corresponding to the given antenna port is obtained by multiplying the analog beamforming matrix corresponding to the given antenna port by the digital beamforming vector. Different antenna ports in one antenna port group comprise the same antenna group, and different antenna ports in the same antenna port group correspond to different beamforming vectors.

Two antenna port groups are shown in FIG. 9: an antenna port group #0 and an antenna port group #1, wherein the antenna port group #0 comprises an antenna group #0, and the antenna port group #1 comprises an antenna group #1 and an antenna group #2. The mapping coefficients of a plurality of antennas in the antenna group #0 to the antenna port group #0 constitute an analog beamforming vector #0, and the mapping coefficients of the antenna group #0 to the antenna port group #0 constitute a digital beamforming vector #0. The mapping coefficients of a plurality of antennas in the antenna group #1 and a plurality of antennas in the antenna group #2 to the antenna port group #1 respectively constitute an analog beamforming vector #1 and an analog beamforming vector #2, and the mapping coefficients of the antenna group #1 and the antenna group #2 to the antenna port group #1 constitute a digital beamforming vector #1. A beamforming vector corresponding to any antenna port in the antenna port group #0 is obtained by multiplying the analog beamforming vector #0 by the digital beamforming vector #0. The beamforming vector corresponding to any antenna port in the antenna port group #1 is obtained by multiplying the analog beamforming matrix formed by the diagonal arrangement of the analog beamforming vector #1 and the analog beamforming vector #2 by the digital beamforming vector #1.

As one sub-embodiment, one antenna port group comprises one antenna port. For example, the antenna port group #0 in FIG. 9 comprises one antenna port.

As one subsidiary embodiment of the above sub-embodiment, the analog beamforming matrix corresponding to the one antenna port is reduced to the analog beamforming vector, the digital beamforming vector corresponding to the one antenna port is reduced to one scalar, and the beamforming vector corresponding to the one antenna port is equal to the analog beamforming vector corresponding to the one antenna port.

As one sub-embodiment, one antenna port group comprises a plurality of antenna ports. For example, the antenna port group #1 in FIG. 9 comprises a plurality of antenna ports.

As one subsidiary embodiment of the above sub-embodiment, the plurality of antenna ports correspond to the same analog beamforming matrix and different digital beamforming vectors.

As one sub-embodiment, antenna ports in different antenna port groups correspond to different analog beamforming matrices.

As one sub-embodiment, any two antenna ports in one antenna port group are QCL (Quasi-Colocated).

As one sub-embodiment, any two antenna ports in one antenna port group are spatial QCL.

As one embodiment, a plurality of antenna port groups in the figure correspond to one Panel in the present application.

As one embodiment, the first reference signal resource set corresponds to a plurality of antenna port groups.

As one embodiment, the second reference signal resource set corresponds to a plurality of antenna port groups.

As one embodiment, one reference signal resource in the first reference signal resource set corresponds to one antenna port group.

As one embodiment, one reference signal resource in the second reference signal resource set corresponds to one antenna port group.

**Embodiment 10**

Embodiment 10 illustrates one structural block diagram in a first node, as shown in FIG. 10. In FIG. 10, a first node 1000 comprises a first receiver 1001 and a first transmitter 1002.

The first receiver 1001 receives a first signaling, wherein the first signaling is used for determining a first reference signal resource set;

the first transmitter 1002 determines a first power value, and transmits a first signal when the first power value is greater than 0.

In Embodiment 10, the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

As one embodiment, when the first signaling is used for determining the second reference signal resource set, a second threshold is associated with the second reference signal resource set, and the first threshold and the second threshold are used together for determining the target power value; when the first signaling is not used for determining the second reference signal resource set, only the first threshold of the first threshold and the second threshold is used for determining the target power value.

As one embodiment, the first node comprises:

the first receiver 1001, receiving the first target reference signal and the second target reference signal; and

the first transmitter 1002, transmitting a second signal,

wherein time domain resources occupied by the second signal overlap with time domain resources occupied by the first signal; the transmission power of the second signal is a second power value, the second power value is not greater than the second threshold, and the spatial transmission parameter of the second signal is related to the second reference signal resource set; the first target reference signal is used for determining a first pathloss, the second target reference signal is used for determining a second pathloss, the first pathloss is used for determining a first candidate power value, and the second pathloss is used for determining the second power value; when the sum of the first threshold and the second threshold is greater than a third threshold and the sum of the first candidate power value and the second power value is greater than the third threshold, the target power value is equal to the difference between the third threshold and the second power value; when the sum of the first threshold and the second threshold is not greater than the third threshold, the target power value is equal to the first candidate power value.

As one embodiment, the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; when the value obtained by subtracting the first remaining power value from the first candidate power value is not greater than the target threshold, the first power value is not greater than the target power value, and the target power value is equal to the first power difference.

As one embodiment, the third threshold is exclusive to the first node, and the third threshold is unrelated to the first reference signal resource set or the second reference signal resource set.

As one embodiment, the second reference signal resource set is indicated by an RRC signaling, or the second reference signal resource set is predefined.

As one embodiment, a priority corresponding to the second signal is higher than the priority corresponding to the first signal.

As one embodiment, the first receiver 1001 comprises at least the first four of an antenna 452, a receiving device 454, a multi-antenna receiving processor 458, a receiving processor 456, and a controller/processor 459 in Embodiment 4.

As one embodiment, the first transmitter 1002 comprises at least the first four of the antenna 452, a transmitting device 454, a multi-antenna transmitting processor 457, a transmitting processor 468, and the controller/processor 459 in Embodiment 4.

**Embodiment 11**

Embodiment 11 illustrates one structural block diagram in a second node, as shown in FIG. 11. In FIG. 11, a second node 1100 comprises a second transmitter 1101 and a second receiver 1102.

The second transmitter 1101 transmits a first signaling, wherein the first signaling is used for determining a first reference signal resource set; the second receiver 1102 receives a first signal.

In Embodiment 11, the transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; the second reference signal resource set is different from the first reference signal resource set.

According to one aspect of the present application, when the first signaling is used for determining the second reference signal resource set, a second threshold is associated with the second reference signal resource set, and the first threshold and the second threshold are used together for determining the target power value; when the first signaling is not used for determining the second reference signal resource set, only the first threshold of the first threshold and the second threshold is used for determining the target power value.

As one embodiment, the second node comprises:

the second transmitter 1101, transmitting a first target reference signal and a second target reference signal; and
the second receiver 1102, receiving a second signal, wherein time domain resources occupied by the second signal overlap with time domain resources occupied by the first signal; the transmission power of the second signal is a second power value, the second power value is not greater than the second threshold, and the spatial transmission parameter of the second signal is related to the second reference signal resource set; the first target reference signal is used for determining a first pathloss, the second target reference signal is used for determining a second pathloss, the first pathloss is used for determining a first candidate power value, and the second pathloss is used for determining the second power value; when the sum of the first threshold and the second threshold is greater than a third threshold and the sum of the first candidate power value and the second power value is greater than the third threshold, the target power value is equal to the difference between the third threshold and the second power value; when the sum of the first threshold and the second threshold is not greater than the third threshold, the target power value is equal to the first candidate power value.

As one embodiment, the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; when the value obtained by subtracting the first remaining power value from the first candidate power value is not greater than the target threshold, the first power value is not greater than the target power value, and the target power value is equal to the first power difference.

As one embodiment, the third threshold is exclusive to the first node, and the third threshold is unrelated to the first reference signal resource set or the second reference signal resource set.

As one embodiment, the second reference signal resource set is indicated by an RRC signaling, or the second reference signal resource set is predefined.

As one embodiment, a priority corresponding to the second signal is higher than the priority corresponding to the first signal.

As one embodiment, the second transmitter 1101 comprises at least the first four of an antenna 420, a transmitting device 418, a multi-antenna transmitting processor 471, a transmitting processor 414, and a controller/processor 475 in Embodiment 4.

As one embodiment, the second receiver 1102 comprises at least the first four of the antenna 420, a receiving device 418, a multi-antenna receiving processor 472, a receiving processor 470, and the controller/processor 475 in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps of the above embodiments may also be implemented using one or more integrated circuits. Accordingly, each module unit in the above embodiments may be implemented in the form of hardware or in the form of a software function module, and the present application is not limited to any specific form of software and hardware combination. The first node in the present application includes, but is not limited to, mobile phones, tablet computers, laptops, network cards, low-power devices, eMTC devices, NB-IoT devices, vehicle-mounted communication devices, transportation tools, vehicles, RSUs (Road Side Units), aircrafts, airplanes, drones, remote-controlled airplanes and other wireless communication devices. The second node in the present application includes, but is not limited to, macrocellular base stations, microcellular base stations, small cell base stations, Femtocells, relay base stations, eNBs, gNBs, transmission and reception points (TRPs), GNSSs (Global Navigation Satellite Systems), relay satellites, satellite base stations, air base stations, RSUs, drones, test devices, transceiving apparatuses or signaling testers that simulate some functions of base stations, and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node for wireless communication, comprising:

   a first receiver, receiving a first signaling, wherein the first signaling is used for determining a first reference signal resource set; and
   a first transmitter, determining a first power value, and transmitting a first signal when the first power value is greater than 0,
   wherein a transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; and the second reference signal resource set is different from the first reference signal resource set.

2. The first node according to claim 1, wherein when the first signaling is used for determining the second reference signal resource set, a second threshold is associated with the second reference signal resource set, and the first threshold and the second threshold are used together for determining the target power value; and when the first signaling is not used for determining the second reference signal resource set, only the first threshold of the first threshold value and the second threshold value is used for determining the target power value.

3. The first node according to claim 2, comprising:

the first receiver, receiving a first target reference signal and a second target reference signal; and

the first transmitter, transmitting a second signal, wherein time domain resources occupied by the second signal overlap with time domain resources occupied by the first signal; a transmission power of the second signal is a second power value, the second power value is not greater than the second threshold, and a spatial transmission parameter of the second signal is related to the second reference signal resource set; the first target reference signal is used for determining a first path loss, the second target reference signal is used for determining a second path loss, the first path loss is used for determining a first candidate power value, and the second path loss is used for determining the second power value; when the sum of the first threshold and the second threshold is greater than a third threshold and the sum of the first candidate power value and the second power value is greater than the third threshold, the target power value is equal to the difference between the third threshold and the second power value; and when the sum of the first threshold and the second threshold is not greater than the third threshold, the target power value is equal to the first candidate power value.

4. The first node according to claim 3, wherein the sum of the first threshold and the second threshold is greater than the third threshold and the sum of the first candidate power value and the second power value is greater than the third threshold; the difference between the third threshold and the second power value is equal to a first remaining power value; when a value obtained by subtracting the first remaining power value from the first candidate power value is greater than a target threshold, the first power value is equal to 0; and when the value obtained by subtracting the first remaining power value from the first candidate power value is not greater than the target threshold, the first power value is not greater than the target power value, and the target power value is equal to a first power difference.

5. The first node according to claim 3 or 4, wherein the third threshold is exclusive to the first node, and the third threshold is unrelated to the first reference signal resource set or the second reference signal resource set.

6. The first node according to any one of claims 2 to 5, wherein the second reference signal resource set is indicated by an RRC signaling, or the second reference signal resource set is predefined.

7. The first node according to any one of claims 2 to 6, wherein a priority corresponding to the second signal is higher than a priority corresponding to the first signal.

8. A second node for wireless communication, comprising:

a second transmitter, transmitting a first signaling, wherein the first signaling is used for determining a first reference signal resource set; and

a second receiver, receiving a first signal, wherein a transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; and the second reference signal resource set is different from the first reference signal resource set.

9. A method in a first node for wireless communication, comprising:

receiving a first signaling, wherein the first signaling is used for determining a first reference signal resource set; and

determining a first power value, and transmitting a first signal when the first power value is greater than 0,

wherein a transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; and the second reference signal resource set is different from the first reference signal resource set.

10. A method in a second node for wireless communication, comprising:

transmitting a first signaling, wherein the first signaling is used for determining a first reference signal resource set; and

receiving a first signal,

wherein a transmission power of the first signal is the first power value, and a spatial transmission parameter of the first signal is related to the first reference signal resource set; the first power value is not greater than a target power value, the target power value is not greater than a first threshold, and the first threshold is associated with the first reference signal resource set; whether the first signaling is used for determining a second reference signal resource set is used for determining whether the target power value is related to a threshold other than the first threshold; and the second reference signal resource set is different from the first reference signal resource set.

100 ➤ ( First node )

Step 101 Receive a first signaling, wherein the first signaling is used for determining a first reference signal resource set

Step 102 Determine a first power value, and transmit a first signal when the first power value is greater than 0

( End )

FIG. 1

EPS 200

HSS 220

NR-RAN
202

UE 201

NR node B 203

Other NR node Bs 204

MME/AMF/ UPF 211

Other MMEs/AMFs/UPFs 214

S-GW 212

P-GW 213

Internet service 230

5G-CN/EPC
210

FIG. 2

Control plane
300

L3    RRC 306

L2    PDCP 304
305   RLC 303
      MAC 302

L1    PHY 301

User plane
350

      SDAP 356

355   L2    PDCP 354
            RLC 353
            MAC 352

L1    PHY 351

FIG. 3

22

FIG. 4

FIG. 5

FIG. 6

First reference signal resource set

Reference signal resource 1_1

.
.
.

Reference signal resource 1_K1

Second reference signal resource set

Reference signal resource 2_1

.
.
.

Reference signal resource 2_K2

FIG. 7

Beamforming vector
formed on a first Panel

First reference signal resource set

Beamforming vector formed
on s second Panel

Second reference signal resource set

First node

FIG. 8

Antenna port group #0

Antenna port group # (L1-1)

Analog beamforming
vector # 0

Analog beamforming vector # 1

Analog beamforming
vector # 2

Antenna group # 0

Antenna group # (L1-2)

Antenna group # (L1-1)

RF chain

RF chain

Digital beamforming vector # 0

RF chain

Phase shifter

Antenna

Baseband processor

Terminal      Digital beamforming vector # 1

FIG. 9

⌐ 1000

First receiver 1001        First node

First transmitter 1002

FIG. 10

⌐ 1100

Second transmitter 1101        Second node

Second receiver 1102

FIG. 11

## INTERNATIONAL SEARCH REPORT

International application No.

**PCT/CN2023/122532**

### A. CLASSIFICATION OF SUBJECT MATTER

H04W52/14(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 面板, 多, 功率, 门限, 阈值, 参考信号, 信令, 配置, 集合, panel, multiple, power, SRS, resource set, threshold, configuration

### C. DOCUMENTS CONSIDERED TO BE RELEVANT

| Category* | Citation of document, with indication, where appropriate, of the relevant passages | Relevant to claim No. |
|---|---|---|
| X | CN 110972251 A (HUAWEI TECHNOLOGIES CO., LTD.) 07 April 2020 (2020-04-07) description, paragraphs [0164]-[0258] | 1, 2, 6-10 |
| A | CN 114844540 A (SHANGHAI TUILUO COMMUNICATION TECHNOLOGY PARTNERSHIP ENTERPRISE (LIMITED PARTNERSHIP)) 02 August 2022 (2022-08-02) entire document | 1-10 |
| A | US 2022264475 A1 (OFINNO, L.L.C.) 18 August 2022 (2022-08-18) entire document | 1-10 |
| A | WO 2020118574 A1 (OPPO GUANGDONG MOBILE TELECOMMUNICATIONS CO., LTD.) 18 June 2020 (2020-06-18) entire document | 1-10 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 November 2023** | **06 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122532**

| Patent document cited in search report | | | Publication date (day/month/year) | Patent family member(s) | | | Publication date (day/month/year) |
|---|---|---|---|---|---|---|---|
| CN | 110972251 | A | 07 April 2020 | EP | 3860230 | A1 | 04 August 2021 |
| | | | | WO | 2020063923 | A1 | 02 April 2020 |
| | | | | US | 2021235386 | A1 | 29 July 2021 |
| CN | 114844540 | A | 02 August 2022 | US | 2022247530 | A1 | 04 August 2022 |
| US | 2022264475 | A1 | 18 August 2022 | | None | | |
| WO | 2020118574 | A1 | 18 June 2020 | CN | 112703779 | A | 23 April 2021 |

Form PCT/ISA/210 (patent family annex) (July 2022)